# EUROPEAN PATENT APPLICATION

(11) **EP 4 497 500 A1**
(43) Date of publication of application: **29.01.2025**
(21) Application number: 24189504.4
(22) Date of filing: 18.07.2024
(51) Int. Cl.: B01J 21/04, B01J 37/00

(54) **SEMI-LIQUID PASTE COMPOSITION FOR 3D PRINTING AND METHOD FOR PREPARING A 3D PRINTED CATALYST OR CATALYST SUPPORT**

(30) Priority: 24.07.2023 PL 44567223
(71) Applicant: Orlen S.A., 09-411 Plock (PL)
(72) Inventor: Tokarova, Venceslava, Usti nad Labem (CZ); Horova, Dorota, Usti nad Labem (CZ); Sultova, Vladimira, Chlumec (CZ)
(74) Representative: Kondrat, Mariusz

(57) **Abstract**

A semi-liquid paste composition for 3D printing comprising at least three following components: one source of alumina or a mixture of aluminas, water, at least one acid from a group including carboxylic acid and mineral acid, wherein the pH value of the paste composition is between 4-7, wherein the acid:Al₂O₃ weight ratio is in the range 0.005 - 0.05.

## Description

### Technical Field

The invention relates to a semi-liquid composition for 3D printing and method for producing an alumina catalyst or catalyst support from semi-liquid paste composition.

### Background Art

The use of additive technologies, namely 3D printing, brings the possibility to create catalysts with a precisely defined structure. Industrial catalysts are commonly used in the form of powders, tablets, spheres, honeycomb structured monoliths or extrudates of various shapes, but these shapes are considerably limited by the possibilities of extrusion. The advantage of 3D printing is the ability to create complex and accurate structures optimized for the intended purpose. By creating precise structures, heat and mass transfer can be controlled and at the same time the pressure losses in the catalyst bed can be influenced. The overall catalytic performance can be thus influenced due to optimization of the design of the structure. In 3D printing of catalysts or catalyst supports are involved 3D printers based on methods using extrudation of paste, fiber/filament, or powder and slurry-based methods.

As a main component of 3D printed catalysts, alumina is preferred very often, as it is a popular carrier of catalysts generally and its advantages include, besides other things, a significant strength after calcination.

Alumina can be 3D printed by various methods and using various Al₂O₃ precursors. Depending on the desired use, the precursor may be (pseudo) boehmite, transition aluminas (e.g. gamma, delta alumina) and alpha alumina.

3D printing of alumina is studied intensively in connection with 3D printing of ceramic parts, for which a high final density of material is required, defined as the ratio of solid to empty space in the ceramic part. A frequently used method of 3D printing for alumina ceramics production is stereolithography. Sintering temperatures above 1200 ° C are used to achieve high density and mechanical strength.

Probably the first ceramic carrier created by 3D printing, namely by printing the paste, was alumina carrier. Monoliths were prepared from high purity alumina (99.8%). The alumina carrier was subsequently covered with a layer of hexaaluminate BaMn₂Al₁₀O₁₉. High carrier strength was achieved by sintering at 1650°C. A high calcination temperature 1300°C was also used to anchor the BaMn₂Al₁₀O₁₉ layer to the support. The produced catalysts were tested in a methane combustion reaction [Stuecker, J.N., et al., Advanced Support Structures for Enhanced Catalytic Activity. Ind. Eng. Chem. Res., 2004. 43: p. 51-65]. The same catalyst is disclosed in US 7527671.

3D printed Cu/AL₂O₃ catalyst was prepared by Tubio et al. (2016) [Tubío, C.R., et al., 3D printing of a heterogeneous copper-based catalyst. Journal of Catalysis, 2016. 334: p. 110-115]. The printing paste was formed from alpha alumina and aqueous copper nitrate solution. The paste viscosity was adjusted by the addition of hydroxypropyl methylcellulose. Another additive was a cationic polyelectrolyte - polyethyleneimine. The paste containing 51% of solids was extruded through a nozzle with a diameter of 410 µm. The formed structure (10 x 12 mm) was air dried at room temperature for 24 hours and then sintered at 1400 °C for 2 hours (10 °C/min).

Patent application EP2752244A1 discloses the shape of the catalyst of honeycomb structure and the method of its production. The catalyst is designed for selective oxidation or reduction of exhaust gases of internal combustion engines. The shape of the catalyst is achieved by the additive layer manufacturing (ALM) method, 3D printing, stereolithography or laser sintering. The catalyst of the desired shape was prepared from alumina using a Phoenix Systems PX series laser sintering machine. Unmodified alumina powder with an average particle size of about 10 microns was used and assembly was performed in steps of about 100 microns, with compression of each new powder layer prior to laser melting. A 300W fiber laser was used to melt the alumina. Increased strength can be achieved by sintering at temperatures up to about 1800°C.

The production of the catalyst and its precursor/carrier by additive technology is described in WO2016/097760. WO2016/097760 discloses an application of a slurry of the catalyst component to the catalyst carrier formed by the additive technology. The examples describe the ratio of raw materials for the preparation of a mixture for the production of carrier from components α-alumina (Martoxid PN-202, 8-15 m²/g, d50 2-4µm), titanium dioxide (anatase), copper oxide, and polyvinyl alcohol or dextrin as a binder. The prepared mixture was placed in a 3D printer tray (ink-jet powder bed) and 3D 10 mm cubic carriers were printed. The supports were dried overnight at 105°C and then calcined at 1200°C for 2 hours.

However, unlike the above applications, catalytic applications require in most cases a different type of porosity (voids) in the particles - intraparticular, while these 3D printing methods create interparticular porosity [Ludwig, T., et al., Additive Manufacturing of Al2O3 -Based Carriers for Heterogeneous Catalysis. Chemie Ingenieur Technik, 2018. 90(5): p. 703-707]. In addition, a sintering temperature above 1200°C causes a reduction in the specific surface area of the material to values <1 m²/g.

In addition, use of organic binders in 3D printing methods using fibre or powder as catalyst precursor brings a higher probability of defect formation or deformation during necessary subsequent heat treatment. On the contrary direct ink writing using paste of catalyst precursor allows to achieve higher strength without involving excess organic compounds. The advantage of direct ink writing is the possibility of using different calcination temperatures to achieve sufficient catalyst strength, while maintaining the desired specific surface area.

3D printed catalysts or catalyst supports can be successfully produced by 3D printers based on material extrusion, such as Direct Ink Writing (DIW), which means paste/ink extrusion. In fact, this technology is based on pushing out semi-liquid/pasty material (*"*ink*"*) through a small nozzle or orifice under controlled flow rates and deposited along digitally defined paths. The ink (paste) must have a rather precisely regulated viscosity to enable printing (extrusion through a nozzle), but the printed pattern must retain its shape after extrusion, so the paste must not be liquid, but only semi-liquid. As-printed monoliths with a defined pattern are usually fragile and require heat treatment, accompanied by sintering and burning out all organic binders.

Anyway, various alumina types can be used as starting materials for basic paste preparation before ink writing (extrusion). For paste preparation, usually boehmite, but sometimes also other types of hydrated aluminas (alumina hydroxides or hydrated oxides) are preferred for its ability of peptization in acidic media. A peptization reaction between hydrated alumina particles and an acid is a result of chemical surface changes that lead to a partial dissolution of the particles due to a formation of hydrolyzed polymeric cations on the surface of particles. The polymeric cations are supposed to cause short-range repulsive forces. Importantly, this reaction leads to a time-dependent gelation, which changes rheology over time. Kneading and extrusion of nanocrystalline boehmites is a key catalyst shaping process that involves several steps determining textural properties such as a diameter and pore volume of the material [Karouia, F., et al., Control of the textural properties of nanocrystalline boehmite (y-AIOOH) regarding its peptization ability. Powder Technology, 2013. 237: p. 602-609]. Various acids (both inorganic and organic) can work as peptizing agents for alumina and their anions affect specific surface areas as well as a mechanical strength of final products (extrudates/supports/catalysts). Peptization of boehmite with organic and inorganic acids takes place differently due to differences in the polarity of acids. Inorganic acids are more effective as peptizing agents due to the higher polarity of anions, which are therefore more easily absorbed by boehmite particles [Winstone, G., Production of Catalysts Supports by Twin Screw Extrusion of Pastes. 2011, University of Birmingham]. Peptization is also affected by a method of boehmite preparation, for example its crystallization rate.

It is possible to achieve aluminas with different structural characteristics by using different acids for peptizing boehmite [Levin, O.V., et al., Effect of acid peptization on characteristics of aluminum oxide as support. Chemistry and Technology of Fuels and Oils, 1997. 33(2): p. 97-100]. Nitric or acetic acid peptization reduces its overall porosity, whereas phosphoric acid peptization increases its pore volume. Pore size distributions also differ significantly. With nitric acid, pores with a diameter of 10 - 100 nm are formed and a significant reduction in the number of pores> 100 nm occurs. With acetic acid, pores of 10 - 1000 nm predominate and pores smaller than 10 nm and wider than 1000 nm are minimized. With phosphoric acid, pores are limited to 10 -1000 nm. Porosity of peptized aluminas also depends on an amount of the used acid. For example, more than 0.18% of nitric acid in mixture for extrudation leads to a higher strength, but also to a decrease in a specific surface area and volume of macropores.

The particle size distribution is another important parameter among features of starting alumina materials. Using the same amount of acetic acid leads to an increase in a mechanical strength of alumina extrudates with decreasing aluminum hydroxide particle size. The larger are the particles of the starting boehmite, the more acid is needed to achieve the same strength. There is an approximately linear relationship between particle size and the amount of acid required to achieve the desired strength in the range of particle size D50 from 18 to 195 µm. [Jirátová, K., L. Janáček, and P. Schneider, Influence of aluminium hydroxide peptization on physical properties of alumina extrudates, in Preparation of Catalysts III, G. Poncelet, P.A. Joacobs, and P. Grange, Editors. 1983, Elsevier Science. p. 653-663].

Within direct ink writing, properties of a paste (ink) play the most important role. Once peptized alumina is ready, various additives and/or binders can be utilized to improve rheology and/or plasticity of the ink, e.g. ethylene glycol, polyvinyl alcohol etc. Sometimes also sodium 1-heptane sulfonate can be added as a surfactant. Regarding acidity, adjustment to pH 3.5 for alumina peptization was mentioned [Lee, S., et al., Inkjet printing of porous nanoparticle-based catalyst layers in microchannel reactors. Applied Catalysis A: General, 2013. 467: p. 69-75]. EP 3 574 993 discloses a method for preparing a monolithic catalyst based on a transition alumina created by 3D fibre deposition by extrusion through one or more nozzles. The starting material for paste suspension preparation is transition alumina or its precursors. Suitable precursors for the synthesis of catalysts include gibbsite, bayerite, nordstrandite and doyleite (hydroxides), diaspora, boehmite, pseudoboehmite, akdalait and tohdite (oxohydroxides) and mixtures thereof. The heat treatment of green body is limited by an upper limit of 1,000°C. EP3574993 discloses mixture of a precursor of alumina and an aqueous solution of HNO₃ was extruded by a nozzle with diameter 400 µm, without specifying other parameters, dried at 80°C and calcined at 850°C.

WO2020/094570, WO2021/013652, WO2021/013682 disclose a process for forming a catalyst by laying strands of paste according to repeating patterns by the nozzle of a 3D printer. The catalyst monolith consist of strands containing an inorganic oxide support material (silicon dioxide, aluminium oxide, titanium dioxide, zirconium dioxide, magnesium oxide, calcium oxide, hydrotalcites, spinels, zeolites and others) and can contain a catalytically active metal.

Above described methods of catalyst/catalytic carrier 3D printing based on DIW work with peptized alumina as a main raw material, where the paste (ink) for writing is a semi-liquid mixture of a precisely controlled viscosity to enable extrusion through a nozzle. Their disadvantage lies in a limited processability of a paste based on acidic peptized alumina, as in acidic environment peptization continues and makes the alumina more viscous and therefore unusable as ink.

The acid content in paste composition affect the printability of paste in time. A very high acidity leads to very viscous material which loses semi-liquidity very fast. 3D printing of bigger parts or samples series is time-consuming, so it is not desirable that the properties of paste change in time. Achieving longer printability with acidic paste is joined with higher water content in paste composition, which is disadvantageous for other necessary processing of printed bodies (drying and calcination).

It is necessary to find the balance in the composition of the paste so that its printability is guaranteed, at the same time there is no collapse of the printed products but also no excessive shrinkage during the necessary subsequent drying and heat treatment. For many catalytic processes is advantageous to use carrier/catalyst with high surface area, which can be prepared for example by direct ink writing method and calcined at temperatures below 1000°C according to EP 3 574 993. Another catalytic processes, however, use carriers with a small surface area to their advantage.

For example selective hydrogenation of acetylene in ethylene involves limited not very high surface area of a catalyst support in order to minimize contact time of reacting species and avoid consequent reactions. In any case, surface tuning of alumina catalyst carriers can be achieved in these cases by calcination temperatures above 1000°C, which results in surface area decrease.

These drawbacks are at least partially eliminated by the manufacture method of a catalyst or catalyst support lying in controlled rheological stability and consequent long-time processability of a 3D printed paste for its preparation according to this invention.

The object of the present invention is to obtain semi-liquid paste composition which is long-term processable and its stability in time does not change even after storage for up to 6 months with perfect quality. The method of preparing of a catalyst or catalyst support from the semi-liquid paste composition is also the object of the invention.

The paste is even after 6 months storage extrudable via 3D printer needles or nozzles and keeps its shape after extrudation.

### Disclosure of Invention

The object is achieved by a semi-liquid paste composition for 3D printing comprising at least three following components:
a) one source of alumina or a mixture of aluminas;
b) water;
c) at least one acid from a group including carboxylic acid and mineral acid, wherein the pH value of the paste composition is between 4-7, wherein the acid:Al₂O₃ weight ratio is in the range 0.005 - 0.05. The composition comprises 80 to 120 parts by weight of source of alumina or a mixture of aluminas, 0.9 to 130 parts by weight of acid having a concentration 0.7-99.8 weight percent and 0.1 to 130 parts by weight of water. Water is added according to the consistency of the paste. The amount of acid used in paste composition affects the viscosity of the paste, the strength of the resulting bodies of catalysts/catalysts supports, and also the amount of water added to achieve a viscosity suitable for printing and thus the overall shrinkage during drying and calcination.

The viscosity of paste after preparation is from 0.5 Pa.s to 4 Pa.s (measured at shear rate 100 1/s, 25 °C, measured by plate/plate measuring system). Viscosity in the time of printing is usually between 2 - 15 Pa.s (at shear rate 100 1/s, 25°C).

The viscosity of paste must be in the range where the paste is easy to process, extrudable with a needle of the selected diameter, but at the same time it must keep its shape and not spill after extrusion by 3D printer needle, even when adding more printed layers, and the uniform printed layers should be joined together. And at the same time, the water content in the paste should be minimized to reduce shrinkage of printed bodies during drying and calcination. It is important for the essence of the invention that the pH of the paste, i.e. the amount of added acid, is closely related to the rate of change in the viscosity of the paste over time. Pastes with a pH close to neutral, which corresponds to the acid:Al₂O₃ weight ratio in the range 0,005-0,05, are characterized by a gradual change in viscosity, and the pastes prepared by the process according to the invention have printability in the order of days to months, while this viscosity hardly changes from a certain point.

Preferable the acid is chosen from the group of acetic acid, nitric acid, phosphoric acid. Preferable the alumina source is hydrated alumina or boehmite with a particle size d₅₀ < 60 µm, or their mixture.

The paste composition additionally comprises at least one substance from a group including glycerine, polyethylene glycol, oleic acid, polyvinyl alcohol, polyvinyl acetate, and octanol.

Preferable the paste composition has pH in the range 6.2-6.8 and acid:Al₂O₃ weight ratio is in the range 0,005-0,02.

Another object of the invention is a method for preparing of a catalyst or catalyst support from the paste composition according to the invention, comprising the following steps:
a) providing the semi-liquid paste composition according to the invention;
b) filling the paste composition of step a) into a container;
c) aging the paste in container for 12 - 72 hours at temperatures between 1°C and 30°C;
d) optionally, storage the paste from step c) for up to 6 months, at temperatures between 1°C and 30°C;
e) shaping the paste composition of step c) or d) to form 3D structure of a catalyst or catalyst support by direct ink writing method;
f) drying the 3D structure of step e);
g) calcining the 3D structure of step f) at a temperature in the range 1050 °C up to 1200 °C to obtain catalyst or catalyst support.

The container is a vessel used for storage paste and compatible with extrusion equipment, for example plastic syringes or aluminum cylinder with piston.

During the aging stage paste is stored in closed container without presence of air at temperatures between 1 °C and 30 °C to reach viscosity suitable for 3D printing. After the aging step (usually 12 h - 72 h), the viscosity of paste remains almost unchanged and paste can be stored under the same conditions up to 6 months.

The essence of the invention lies in the controlled peptization of the alumina with its subsequent cessation, so that the rheological properties of the paste do not change even in a long time interval. This controlled and stopped peptization is enabled by precise adjusting pH of the paste in the range very weakly acidic close to neutral. pH 4-7 is as range of week acidity which causes only moderate peptization, slow in time and therefore the paste does not change its viscosity quickly, but slowly and therefore it can be used for a long time. Variable acid amount strongly influenced the content of water in pastes which was necessary for smooth printability. The higher content of acid, the more water is needed for good printability.

The higher was the water content in pastes, the higher is the shrinkage of printed bodies after drying and calcination, which results in serious cracks in bodies.

The advantage of using direct ink writing method lies in the possibility to obtain the catalysts or catalyst supports based on various alumina crystal phases (alpha, gamma, and various transition phases).
Figure 1 shows final bodies of catalyst support after calcination at 1175°C.
Figure 2 shows final bodies of catalyst support after calcination.
Figure 3 shows 3D printed hexagonal catalyst support dried at 25°C.

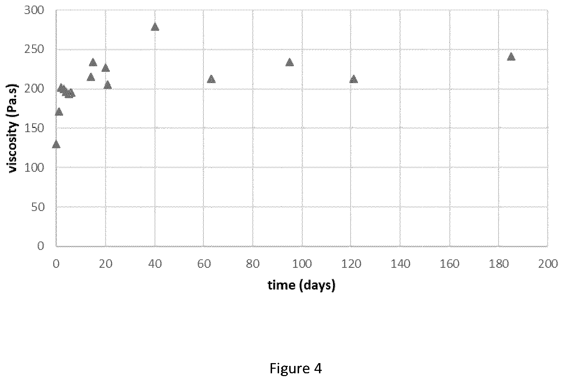

Figure 4 shows changes of viscosity of paste in time during storage at 8°C, (for 25°C, 11/s).

### Examples

### Example 1: Real 3D printing of alumina paste by direct ink writing

A paste was prepared from a mixture containing 80 g of alumina hydrate Pural SCF 55, 12 g of acetic acid solution of a 5 wt. % concentration in acid:Al₂O₃ ratio 0,010, 80 g of water and 8 g of polyethylene glycol. All ingredients were thoroughly mixed in a mixer equipped with a silicone-coated broom for 30 minutes. The final pH of paste was 6.8. Prepared liquid paste was filled into syringes and stored at the temperature of 8 °C for 9 days. The paste was printed via 0.84 mm needle. The dynamic viscosity of paste at the time of printing was 320 Pa.s (25°C, shear rate 1 s⁻¹).

### Example 2:

The catalyst support was created by 3D printing of paste prepared by mixing 80 g mixture of high density alumina hydrate and boehmite in the weight ratio 2:3, 20 g 5 wt. % of acetic acid in acid:Al₂O₃ ratio 0,016, 8 g polyethylene glycol and 76 g of distilled water. The pH of paste after mixing was 5.8. The paste was before 3D printing stored for 1 months at the 8 °C in the closed container. The 3D printing was realized by paste extrusion via 0.84 mm needle. These bodies were dried and calcined at 1175 °C.

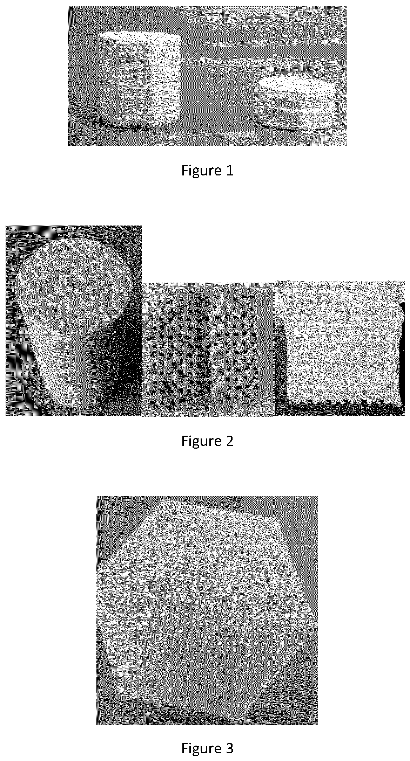

Final bodies of catalyst support after calcination at 1175 °C are shown in Figure 1.

### Example 3:

Paste for 3D printing was prepared from 120 g of Pural SCF 55 as alumina source, acetic acid (concentration 3 wt. %), 12 g of polyethylene glycol (PEG), and 90 g of water. The amount of acid was added so that the final pH of the paste was 6.2. The resulting mixture was treated for 30 minutes and the liquid paste was poured into syringes. One part of syringes with paste was aged at 22°C for 24 hours to achieve viscosity suitable for printing and printed via needle of 1.02 mm diameter. These bodies were dried and calcined at 1100 °C. Final bodies of catalyst support after calcination are shown in Figure 2. The height of the printed structure was 72 mm, the diameter 36 mm.

Second part of syringes with prepared paste was stored at 8 °C for 14 days and paste was printed via needle of 0.84 diameter. Printed bodies were dried and calcined at 1100°C.

### Example 4:

Paste for 3D printing was prepared by mixing 120 g of hydrated alumina with particle size d₅₀ = 25 µm, 18 g 5 wt. % of acetic acid in acid:Al₂O₃ ratio 0,01, 12 g of polyethylene glycol, 100 g of water and 0.025 g of n-octanol as the bubble prevention agent. n-octanol improved the collection of micro-bubbles into larger ones and their escape from pastes. The mixture was mixed for 20 minutes and 10 g of water was added while the mixing intensity was lowered - at the beginning mixing rate was 500 rpm and at the end of mixing 200 rpm. Total mixing time was 30 minutes. The final pH of paste was 6.4 and the viscosity 390 Pa.s (25°C, shear rate 1 s⁻¹). The paste was stored 28 days at 8°C, the dynamic viscosity at the time of printing was 561 Pa.s (25°C, shear rate 1 s⁻¹). Catalyst support in hexagonal shape (edge length 65 mm, high 40 mm) was printed with 1.2 mm diameter needle and dried at 25 °C (Figure 3).

### Example 5:

A: The catalyst support was created by 3D printing of paste prepared by mixing 80 g mixture of high density alumina hydrate and boehmite in the weight ratio 2:3, 12 g 5 wt. % of nitric acid in acid:Al₂O₃ ratio 0,009, 8 g polyethylene glycol and 76 g of distilled water. The pH of paste after mixing was 6.2. The 3D printing was realized by paste extrusion via 0.84 mm needle.

B: The catalyst support was created by 3D printing of paste prepared by mixing 80 g mixture of high density alumina hydrate and boehmite in the weight ratio 2:3, 20 g 5 wt. % of nitric acid in acid:Al₂O₃ ratio 0,015, 8 g polyethylene glycol and 84 g of distilled water. The pH of paste after mixing was 5.2. 3D printing was realized immediately after mixing by paste extrusion via 0.84 mm needle. These bodies were dried and calcined at 1050 °C.

### Example 6:

A paste was prepared from a mixture containing the mixture of boehmite and alumina hydrate in the weight ratio 4:1, nitric acid solution of a 0.07 wt. % concentration in acid:Al₂O₃ ratio 0.0092 and polyethylene glycol in weight corresponding to 0.01 that of solid compounds, the total solid content in paste was 45.5 %. All ingredients were thoroughly mixed in a mixer equipped with a silicone-coated broom for 30 minutes. The final pH of paste was 6.2. Prepared semi-liquid paste was filled into syringes and stored at the temperature of 8 °C for 48 h. The paste was printed via 0.84 mm needle.

### Example 7:

Concentrated phosphoric acid (85 %) was used for peptization of alumina hydrate in the acid : Al₂O₃ weight ratio 0.0165 together with distilled water for obtaining semi-liquid paste with total solid phase content in paste 45 %. Prepared paste was filled into syringes and printed via 0.84 mm needle.

### Industrial Applicability

The manufacture method of a catalyst or catalyst support from a long-term processable paste for 3D printing can be utilized in 3D printing process in industrial scale where time consuming 3D printing process can be much slower than preparation of the paste and therefore the paste must keep its stable rheological properties for sufficiently long time to prevent the paste from spoilage and consequent economical losses.

## Claims

1. A semi-liquid paste composition for 3D printing comprising at least three following components:
a) one source of alumina or a mixture of aluminas;
b) water;
c) at least one acid from a group including carboxylic acid and mineral acid, wherein the pH value of the paste composition is between 4-7, wherein the acid:Al₂O₃ weight ratio is in the range 0.005 - 0.05;

2. The paste composition according to claim 1, wherein the composition comprises 80 to 120 parts by weight of source of alumina or a mixture of aluminas, 0.9 to 130 parts by weight of acid having a concentration 0.7-99.8 weight percent and 0.1 to 130 parts by weight of water.

3. The paste composition according to claim 1 or 2, wherein the acid is chosen from the group of acetic acid, nitric acid, phosphoric acid.

4. The paste composition according to claims 1 or 2 or 3, wherein the alumina source is hydrated alumina or boehmite with a particle size d₅₀ < 60 µm, or their mixture.

5. The paste composition according to claim 1 or 2 or 3 or 4, wherein paste composition additionally comprises at least one substance from a group including glycerine, polyethylene glycol, oleic acid, polyvinyl alcohol, polyvinyl acetate, and octanol.

6. The paste composition according to claim 1 or 2 or 3 or 4 or 5, wherein the paste composition has pH in the range 6.2-6.8 and acid:Al₂O₃ weight ratio is in the range 0.005-0.02.

7. A method for preparing of a catalyst or catalyst support from the paste composition as defined in any claims 1-6, comprising the following steps:
a) providing the semi-liquid paste composition as defined in any claims 1-6;
b) filling the paste composition of step a) into a container;
c) aging the paste in container for 12 - 72 hours at temperatures between 1°C and 30°C;
d) optionally, storage the paste from step c) for up to 6 months, at temperatures between 1°C and 30°C;
e) shaping the paste composition of step c) or d) to form 3D structure of a catalyst or catalyst support by direct ink writing method;
f) drying the 3D structure of step e);
g) calcining the 3D structure of step f) at a temperature in the range 1050 °C up to 1200 °C to obtain catalyst or catalyst support.
